(19) **Europäisches Patentamt**
**European Patent Office**
**Office européen des brevets**

(11) **EP 2 236 188 B1**

(12) **EUROPEAN PATENT SPECIFICATION**

(45) Date of publication and mention
of the grant of the patent:
**20.06.2012 Bulletin 2012/25**

(51) Int Cl.:
**B01D 46/24** *(2006.01)*

(21) Application number: **10250480.0**

(22) Date of filing: **15.03.2010**

(54) **Honeycomb catalyst body**

Wabenförmiger Katalysatorkörper

Corps de catalyseur en nid d'abeille

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.03.2009 JP 2009072372**

(43) Date of publication of application:
**06.10.2010 Bulletin 2010/40**

(73) Proprietor: **NGK Insulators, Ltd.**
**Nagoya-city, Aichi 467-8530 (JP)**

(72) Inventors:
 • **Saito, Chika**
  **Nagoya-city, Aichi-ken 467-8530 (JP)**
 • **Hirose, Syogo**
  **Nagoya-city, Aichi-ken 467-8530 (JP)**

 • **Kuki, Tatsuyuki**
  **Nagoya-city, Aichi-ken 467-8530 (JP)**
 • **Miyairi, Yukio**
  **Nagoya-city, Aichi-ken 467-8530 (JP)**
 • **Harada, Masashi**
  **Nagoya-city, Aichi-ken 467-8530 (JP)**
 • **Noguchi, Yasushi**
  **Nagoya-city, Aichi-ken 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
**EP-A1- 1 707 251**      **FR-A1- 2 893 861**
**US-A1- 2008 110 143**

**Description**

BACKGROUND OF THE INVENTION

The present invention relates to a honeycomb catalyst body. More particularly, the present invention relates to a honeycomb catalyst body that effectively purifies toxic substances (e.g., carbon monoxide (CO), hydrocarbons (HC), nitrogen oxides (NOx), sulfur oxides (SOx), and particulate matter (PM)) contained in exhaust gas discharged from an automobile engine, a construction machine engine, an industrial stationary engine, a combustion apparatus, and the like.

A catalyst body having a honeycomb structure (i.e., honeycomb catalyst body) has been used to purify exhaust gas discharged from an engine or the like. The honeycomb catalyst body has a structure in which a catalyst layer is supported on the surface of a partition wall that forms cells. When purifying exhaust gas using such a honeycomb catalyst body (honeycomb structure), exhaust gas that has entered the cells of the honeycomb catalyst body through one end face of the honeycomb catalyst body comes in contact with the catalyst layer formed on the surface of the partition wall, and is discharged to the outside of the honeycomb catalyst body through the other end face of the honeycomb catalyst body (refer to JP-A-2003-33664, for example).

In this case, it is necessary to improve the purification efficiency by allowing the purification target components (e.g., particulate matter) contained in exhaust gas to be transferred to the catalyst layer formed on the surface of the partition wall as efficiently as possible. The exhaust gas purification efficiency can be improved by reducing the hydraulic diameter of the cells and increasing the surface area of the partition wall. For example, the number of cells (cell density) per unit area is increased. However, particulate matter contained in exhaust gas cannot be advantageously removed when using the above method. Therefore, the end faces of the honeycomb catalyst body may be alternately plugged so that exhaust gas passes through the partition wall (refer to JP-A-2001-269585, for example).

EP 1 707 251 describes a honeycomb structure. The cells of that structure may be alternately plugging, and the structure may support catalyst. A partition wall thickness of 150 to 400 $\mu$m is mentioned, along with an average pore size of 10 to 30 $\mu$m, a porosity of 30% to 80%, and a cell density of 31 to 78 cells/cm$^2$. It also mentions an "aperture ratio" (equivalent to the open frontal area ratio) of 58% to 75%.

US 2008/110143 also describes a honeycomb structure. The cells of that structure may be alternately plugging, and the structure may support catalyst. A partition wall thickness of 70 to 600 $\mu$m is mentioned, along with an average pore size (median) of 10 to 30 $\mu$m, porosity of greater than 30%, and cell density of 10.9 to 62 cells/cm$^2$. The document does not mention open frontal area ratio or equivalent.

SUMMARY OF THE INVENTION

The transfer rate of the purification target components from exhaust gas to the catalyst layer formed on the surface of the partition wall increases in inverse proportion to the square of the hydraulic diameter of the cells. Specifically, the transfer rate of the purification target components increases as the cell density increases. On the other hand, the pressure loss when exhaust gas passes through the cells tends to increase in inverse proportion to the square of the hydraulic diameter of the cells. Therefore, the pressure loss increases along with an increase in the transfer rate of the purification target components. An increase in pressure loss may be suppressed by reducing the thickness of the partition wall of the honeycomb structure. However, the strength of the partition wall decreases as a result of reducing the thickness of the partition wall.

The honeycomb catalyst body disclosed in JP-A-2003-33664 and the filter disclosed in JP-A-2001-269585 are not satisfactory from the viewpoint of a reduction in thickness of the partition wall. Therefore, development of a honeycomb catalyst body that allows the partition wall to have a sufficient strength and a reduced thickness, shows a low pressure loss, and exhibits a high particulate matter collection efficiency and a high exhaust gas purification efficiency, has been desired.

The present invention was conceived in view of the above problems. An object of the present invention is to provide a honeycomb catalyst body that allows the partition wall to have a sufficient strength and a reduced thickness, shows a low pressure loss, and exhibits a high particulate matter collection efficiency and a high exhaust gas purification efficiency.

According to the present invention, the following honeycomb catalyst body is provided.

[1] A honeycomb catalyst body comprising:

a honeycomb structure that includes a porous partition wall that has a number of pores and is disposed to form a plurality of cells that extend between two end faces of the honeycomb structure, and a plurality of plugging sections that are disposed to plug the plurality of cells on either of the end faces or inside the plurality of cells; and

a catalyst layer that is supported on the surface of the partition wall and contains a catalyst,
the partition wall having a thickness of 76.2 to 177.8 μm, an average pore size of 8 to 30 μm, and a porosity of 10 to 35%, and the honeycomb structure having a cell density of 12.4 to 45.0 cells/cm$^2$ ; and
wherein the ratio of the total open area of the plurality of cells to the sum of the cross-sectional area of the partition wall and the total open area of the plurality of cells in a cross section perpendicular to a cell extension direction is 83 to 90%.

[2] The honeycomb catalyst body according to [1], wherein the partition wall has a permeability of $1 \times 10^{-12}$ to $6 \times 10^{-12}$ m$^2$.

[3] The honeycomb catalyst body according to [1] or [2] wherein the hydraulic diameter (m) of the cells and the permeability (m$^2$) of the partition wall satisfy the relationship "(hydraulic diameter of cells)$^2$ / (permeability) = $1.0 \times 10^5$ to $4.5 \times 10^6$".

[4] The honeycomb catalyst body according to any one of [1] to [3], wherein the honeycomb structure is formed of a material that contains at least one ceramic selected from the group consisting of cordierite, aluminum titanate, silicon carbide, sialon, mullite, silicon nitride, zirconium phosphate, zirconia, titania, alumina, and silica.

[5] The honeycomb catalyst body according to any one of [1] to [4], the honeycomb catalyst body having a thermal expansion coefficient of $1.0 \times 10^{-6}$/°C or less measured at 40 to 800°C in the cell extension direction.

[6] The honeycomb catalyst body according to any one of [1] to [5], wherein the catalyst is an oxidizing catalyst that contains platinum and cerium oxide.

[7] The honeycomb catalyst body according to any one of [1] to [5], wherein the catalyst is a three-way catalyst that contains at least one noble metal selected from the group consisting of platinum, rhodium, and palladium, and a promoter that contains at least one of cerium oxide and zirconium oxide.

[8] The honeycomb catalyst body according to any one of [1] to [5], wherein the catalyst is a NOx occlusion/reduction catalyst that contains at least one of an alkali metal and an alkaline earth metal.

[4] The honeycomb catalyst body according to any one of [1] to [8], wherein the catalyst layer further contains a promoter that contains at least one compound selected from the group consisting of alumina, zirconia, and ceria, and a holding material that holds the catalyst and the promoter.

[10] The honeycomb catalyst body according to any one of [1] to [9], wherein the catalyst layer has a density of 80 to 400 g/L.

The honeycomb catalyst body according to the present invention allows the partition wall to have a sufficient strength and a reduced thickness, shows a low pressure loss, and exhibits a high particulate matter collection efficiency and a high exhaust gas purification efficiency.

BRIEF DESCRIPTION OF THE DRAWINGS

FIG. 1 is a front view schematically showing a honeycomb catalyst body according to one embodiment of the present invention.
FIG 2 is a cross-sectional view of the honeycomb structure shown in FIG. 1 along the cell extension direction.
FIG 3 is an enlarged cross-sectional view of part of the honeycomb structure shown in FIG. 2.
FIG 4 is an enlarged cross-sectional view schematically showing part of the partition wall of a honeycomb structure according to another embodiment of the present invention.
FIG 5 is a cross-sectional view schematically showing a honeycomb catalyst body according to another embodiment of the present invention.
FIG 6 is a schematic view illustrative of a specimen used to measure the permeability.

DESCRIPTION OF PREFERRED EMBODIMENTS

Embodiments of the present invention are described below. Note that the present invention is not limited to the following embodiments. Various modifications, improvements, and the like may be appropriately made of the following embodiments without departing from the scope of the present invention based on the knowledge of a person skilled in the art.

[1] Honeycomb catalyst body

A honeycomb catalyst body according to one embodiment of the present invention includes a honeycomb structure that includes a porous partition wall that has a number of pores and is disposed to form a plurality of cells that extend between two end faces of the honeycomb structure, and a plurality of plugging sections that are disposed to plug the plurality of cells on either of the end faces or inside the plurality of cells, and a catalyst layer that is supported on the surface of the partition wall and contains a catalyst. The partition wall of the honeycomb catalyst body according to this embodiment has a thickness of 76.2 to 177.8 $\mu$m, an average pore size of 8 to 30 $\mu$m, and a porosity of 10 to 35%, and the honeycomb structure has a cell density of 12.4 to 45.0 cells/cm$^2$. The honeycomb catalyst body having the above configuration allows the partition wall to have a sufficient strength and a reduced thickness, shows a low pressure loss, and exhibits a high particulate matter collection efficiency and a high exhaust gas purification efficiency.

A wall-flow filter has been known as an exhaust gas purification apparatus. The wall-flow filter includes a plurality of cells that extend from an inlet end face (one end face) to an outlet end face (the other end face), and a plurality of plugging sections that plug the cells alternately on the inlet end face and the outlet end face. The wall-flow filter is widely used due to low pressure loss and high particulate matter collection efficiency. However, a pressure loss necessarily occurs even when using the wall-flow filter. Therefore, the cell open frontal area (OFA) described later is increased to reduce the pressure loss.

It is necessary to reduce the thickness of the partition wall in order to increase the cell open frontal area. However, the strength of the partition wall necessarily decreases as a result of reducing the thickness of the partition wall. When the porosity of the partition wall is reduced to achieve a sufficient strength, the gas permeability of the partition wall decreases so that the pressure loss increases.

When using the wall-flow filter as an exhaust gas purification apparatus for a diesel engine or a gasoline engine, since a reduction in size and cost is desired for the purification apparatus, it is desirable that the wall-flow filter itself purify exhaust gas in order to reduce the number of parts. In this case, a catalyst must be supported inside the pores formed in the partition wall so that the wall-flow filter purifies exhaust gas. However, the gas permeability of the partition wall decreases due to the catalyst supported inside the pores so that the pressure loss increases.

Since the honeycomb catalyst body according to the present invention has the above configuration, the porosity of the partition wall is reduced to achieve a sufficient strength. The flow resistance of the partition wall can be reduced by moderately increasing the pore size (average pore size) while maintaining the reduced porosity. Since the catalyst layer formed on the surface of the partition wall has a substantially zero exhaust gas flow resistance (i.e., high permeability), the partition wall has a reduced thickness while maintaining a sufficient strength, and the pressure loss is reduced. Moreover, the honeycomb catalyst body according to the present invention can purify carbon monoxide (CO), hydrocarbons (HC), and nitrogen oxides (NOx) contained in exhaust gas.

The honeycomb catalyst body according to the present invention may be used as an exhaust gas purification apparatus that removes particulate matter contained in exhaust gas discharged from an internal combustion engine (e.g., diesel engine or gasoline engine), a boiler, or the like, and may be suitably used as a purification apparatus that removes particulate matter contained in exhaust gas discharged from a direct-injection gasoline engine. Specifically, since the amount of particulate matter contained in exhaust gas discharged from a direct-injection gasoline engine is small as compared with a diesel engine, the thickness of the partition wall need not be increased as compared with the case of using the honeycomb catalyst body for a diesel engine. Therefore, a high PM collection efficiency can be achieved without causing an increase in pressure loss by utilizing the honeycomb structure according to the present invention. Since the honeycomb catalyst body has small heat capacity, the catalyst can be easily and continuously regenerated. Therefore, the honeycomb catalyst body according to the present invention is suitable as a PM collection apparatus (purification apparatus) for a gasoline engine for which an increase in pressure loss (power loss) is particularly undesirable.

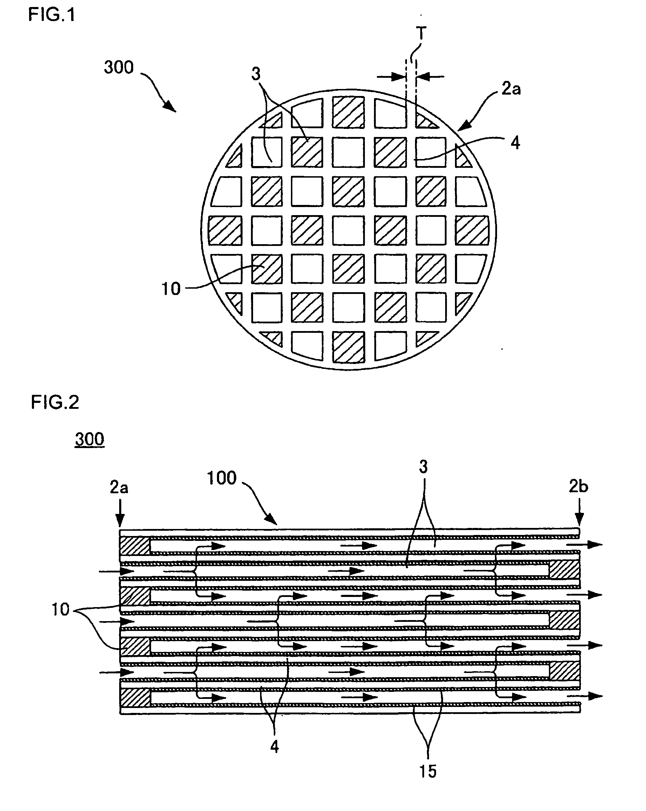

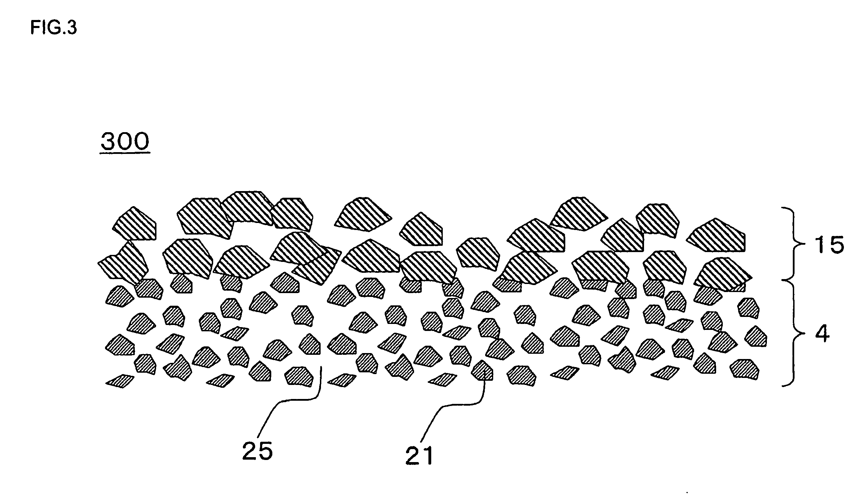

FIG 1 is a front view schematically showing a honeycomb catalyst body according to one embodiment of the present invention. FIG 2 is a cross-sectional view of the honeycomb structure shown in FIG 1 along the cell extension direction. FIG 3 is an enlarged cross-sectional view of part (i.e., the surface of the partition wall) of the honeycomb structure shown in FIG 2.

As shown in FIG 2, a honeycomb catalyst body 300 shown in FIG. 1 includes a honeycomb structure 100 that includes a porous partition wall 4 that has a number of pores 25 (see FIG 3) and is disposed to form a plurality of cells 3 that extend between two end faces 2a and 2b of the honeycomb structure, and a plurality of plugging sections 10 that are disposed to plug the cells 3 on either of the end faces 2a and 2b, and a catalyst layer 15 that is supported on the surface of the partition wall 4 and contains a catalyst. The honeycomb catalyst body 300 shown in FIG 1 is a wall-flow filter that exhibits a low pressure loss and a high particulate matter collection efficiency.

In the honeycomb catalyst body according to the present invention, the ratio of the total open area of the cells to the sum of the cross-sectional area of the partition wall and the total open area of the cells in the cross section perpendicular the cell extension direction (hereinafter may be referred to as "cell open frontal area") is 83 to 90%, and more preferably 86 to 88%. If the cell open frontal area is less than 83%, the pressure loss may increase. If the cell open frontal area is more than 90%, a decrease in strength of the partition wall, an increase in filtration flow rate, and a decrease in PM collection efficiency may occur.

The permeability of the partition wall is preferably $1.0 \times 10^{-12}$ to $6.0 \times 10^{-12}$ m$^2$, and more preferably $1.5 \times 10^{-12}$ to $4.0 \times 10^{-12}$ m$^2$. If the permeability of the partition wall is less than $1.0 \times 10^{-12}$ m$^2$, the pressure loss may increase. If the permeability of the partition wall is more than $6.0 \times 10^{-12}$ m$^2$, the PM collection efficiency may decrease.

In the honeycomb catalyst body according to the present invention, the hydraulic diameter (m) of the cells and the permeability (m$^2$) of the partition wall preferably satisfy the relationship "(hydraulic diameter of cells)$^2$ / (permeability) = $1.0 \times 10^5$ to $4.5 \times 10^6$", and more preferably satisfy the relationship "(hydraulic diameter of cells)$^2$ /(permeability) = $1.5 \times 10^5$ to $2.5 \times 10^6$". If the value "(hydraulic diameter of cells)$^2$ /(permeability)" is less than $1.0 \times 10^5$, the cells may be clogged. If the value "(hydraulic diameter of cells)$^2$ / (permeability)" is more than $4.5 \times 10^6$, the pores formed in the partition wall may be clogged.

The term "hydraulic diameter of cells" used herein refers to a value calculated by "4 x (cross-sectional area) / (circumferential length)". The term "cross-sectional area" used in the above expression refers to the cell open area in a cross section perpendicular to the cell extension direction, and the term "circumferential length" used in the above expression refers to the length of the closed line that forms the cell in a cross section perpendicular to the cell extension direction.

The term "permeability" used herein refers to a value calculated by the following expression (I). The permeability is an index that indicates the flow resistance when a given gas passes through a specimen (partition wall). In the expression (1), C indicates the permeability (m$^2$), F indicates the gas flow rate (cm$^3$/s), T indicates the thickness (cm) of the specimen, V indicates the gas viscosity (dynes·sec/cm$^2$), D indicates the diameter (cm) of the specimen, and P indicates the gas pressure (PSI). In the expression (1), 13.839 PSI equals 1 atm, and 68947.6 dynes·sec/cm$^2$ equals 1 PSI.

$$C = \frac{8\,F\,T\,V}{\pi D^2 (P^2 - 13.839^2) / 13.839 \times 68947.6} \times 10^{-4} \qquad (1)$$

The honeycomb catalyst body according to the present invention preferably has a thermal expansion coefficient of $1.0 \times 10^{-6}$/°C or less measured at 40 to 800°C in the cell extension direction, more preferably $0.8 \times 10^{-6}$/°C or less, and particularly preferably $0.5 \times 10^{-6}$/°C or less. If the thermal expansion coefficient is more than $1.0 \times 10^{-6}$/°C, a thermal stress may occur during use at a high temperature so that breakage may occur. The term "thermal expansion coefficient" used herein refers to a value measured by push-rod dilatometry.

It is preferable that the cross-sectional shape of the honeycomb catalyst body along the direction perpendicular to the cell extension direction correspond to the inner shape of an exhaust system in which the honeycomb catalyst body is installed. Specific examples of the cross-sectional shape of the honeycomb catalyst body include a circle, an ellipse, an oval, a trapezoid, a triangle, a quadrangle, a hexagon, an asymmetric shape, and the like. Among these, a circle, an ellipse, or an oval is preferable.

Examples of the cross-sectional shape of the cell along the direction perpendicular to the cell extension direction include a circle, an ellipse, an oval, a trapezoid, a triangle, a quadrangle, a hexagon, an octagon, an asymmetric shape, and the like. Among these, a circle, a hexagon, or an octagon is preferable. It is preferable that the cells that are plugged on the inlet side (i.e., the cells that are open on the outlet side) be smaller in size (open area) than the cells that are plugged on the outlet side (i.e., the cells that are open on the inlet side). When the open area of the cells that are open on the inlet side is larger than that of the cells that are open on the outlet side, a sufficient space remains in the cells even if PM or ash contained in combustion gas is deposited in the cells that are open on the inlet side during use. This makes it possible to suppress an increase in pressure loss due to deposition of ash.

The honeycomb catalyst body according to the present invention may be used as a purification apparatus that can replace a known purification apparatus that supports a catalyst (e.g., three-way catalyst).

[1-1] Honeycomb structure

The honeycomb structure includes a porous partition wall that has a number of pores and is disposed to form a plurality of cells that extend between two end faces of the honeycomb structure, and a plurality of plugging sections that are disposed to plug the plurality of cells on either of the end faces or inside the plurality of cells. A honeycomb catalyst body that shows a low pressure loss and exhibits a high exhaust gas particulate matter (PM) collection efficiency can be obtained by utilizing the honeycomb structure according to the present invention.

] The honeycomb structure is preferably formed of a material that contains at least one ceramic selected from the group consisting of cordierite, aluminum titanate, silicon carbide, sialon, mullite, silicon nitride, zirconium phosphate, zirconia, titania, alumina, and silica. A honeycomb structure formed of such a material exhibits high heat resistance to maintain its function even when exposed to high-temperature exhaust gas.

[1-1-1] Partition wall

The partition wall has a number of pores (i.e., porous) and is disposed to form a plurality of cells that extend between two end faces of the honeycomb structure, and satisfies the above conditions. Such a partition wall allows exhaust gas that has entered the honeycomb structure through one end face to enter the adjacent cells so that particulate matter contained in the exhaust gas can be collected. The exhaust gas can thus be purified.

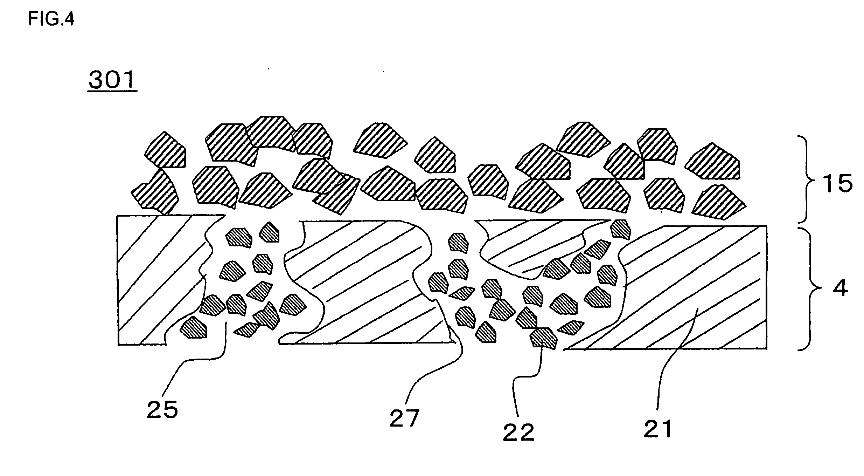

It is preferable that the partition wall include a partition wall body that has a number of pores, and particles that are positioned in the pores. A partition wall having such a configuration can be easily produced. FIG. 4 shows a honeycomb catalyst body 301 that includes a partition wall body 21 that has a number of large pores (through-holes) 27, and particles 22 that are positioned in the large pores 27. The partition wall 4 of the honeycomb catalyst body 301 has the pores 25 that are formed by filling the large pores 27 with the particles 22 (described later). FIG 4 is an enlarged cross-sectional view schematically showing part (i.e., surface) of the partition wall of the honeycomb structure according to another embodiment of the present invention.

The thickness of the partition wall is 76.2 $\mu$m (3 mil) to 177.8 $\mu$m (7 mil), and preferably 76.2 $\mu$m (3 mil) to 127.0 $\mu$m (5 mil). If the thickness of the partition wall is less than 76.2 $\mu$m, a decrease in strength of the partition wall and a decrease in exhaust gas particulate matter (PM) collection efficiency may occur. If the thickness of the partition wall is more than 177.8 $\mu$m, the pressure loss may increase. Note that one mil equals one thousandth of an inch (about 0.025 mm). Note that the thickness of the partition wall used herein refers to a value measured using a scanning electron microscope (SEM). In FIG 1, the thickness of the partition wall is indicated by "T".

The average pore size of the partition wall is 8 to 30 $\mu$m, and preferably 10 to 15 $\mu$m. If the average pore size of the partition wall is less than 8 $\mu$m, the pressure loss may increase. If the average pore size of the partition wall is more than 30 $\mu$m, the PM collection efficiency may decrease. The term "average pore size" used herein refers to a value measured using a mercury porosimeter.

The porosity of the partition wall is 10 to 35%, and preferably 20 to 30%. If the porosity of the partition wall is less than 10%, the pressure loss may increase. If the porosity of the partition wall is more than 35%, the strength of the partition wall may decrease. The term "porosity" used herein refers to a value measured using a mercury porosimeter.

The cell density is 12.4 cells/cm$^2$ (80 cpsi) to 45.0 cells/cm$^2$ (290 cpsi), and preferably 15.5 cells/cm$^2$ (100 cpsi) to 38.8 cells/cm$^2$ (250 cpsi). If the cell density is less than 12.4 cells/cm$^2$, a decrease in strength of the partition wall, an increase in filtration flow rate, and a decrease in PM collection efficiency may occur. If the cell density is more than 45.0 cells/cm$^2$, the pressure loss may increase. Note that the unit "cpsi" is an abbreviation for "cells per square inch"

[1-1-2] Plugging section

The plugging sections are disposed to plug the cells on either of the end faces or inside the cells. A honeycomb structure that shows a low pressure loss and exhibits a high exhaust gas particulate matter (PM) collection efficiency can be obtained by utilizing such plugging sections.

The plugging section may be formed of the same material as that of the partition wall, or may be formed of a material different from that of the partition wall. The material for the plugging section (i.e., plugging slurry) may be obtained by mixing a ceramic raw material, a surfactant, and water optionally together with a sintering aid, a pore-forming agent, and the like to prepare a slurry, and kneading the slurry using a mixer or the like. Examples of the ceramic raw material include $\alpha$-alumina, calcined bauxite, aluminum sulfate, aluminum chloride, aluminum hydroxide, rutile form titanium, anatase form titanium, ilmenite, electro-fused magnesium, magnesite, electro-fused spinel, kaolin, silica glass, quartz, fused silica, and the like. Examples of the surfactant include fatty acid soap, a fatty acid ester, a polyalcohol, and the like.

The arrangement of the plugging sections is not particularly limited insofar as the plugging sections are disposed to plug the cells on either of the end faces or inside the cells. For example, it is preferable that the plugging sections be disposed in a checkered pattern (see the plugging sections 10 of the honeycomb catalyst body 300 shown in FIGS. 1 and 2).

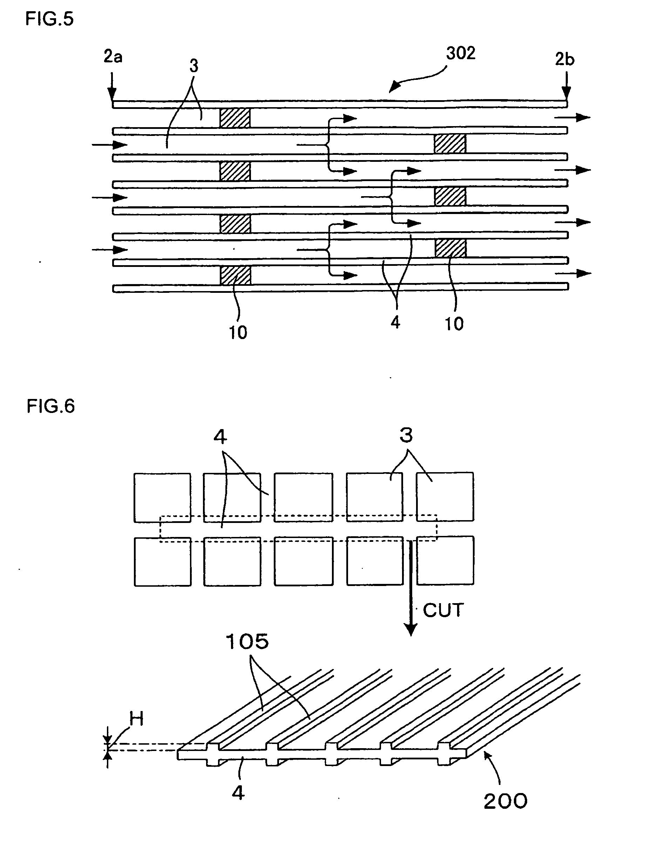

] FIG 5 is a cross-sectional view schematically showing a honeycomb catalyst body according to another embodiment of the present invention. FIG 5 corresponds to FIG 2. In a honeycomb structure 302 shown in FIG 5, the plugging sections are disposed to plug the cells inside the cells. According to this configuration, since exhaust gas passes through the partition wall at least twice, the PM collection efficiency increases. Note that the catalyst layer is omitted in FIG 5.

[1-2] Catalyst layer

The catalyst layer is supported on the surface of the partition wall, and contains a catalyst. Therefore, exhaust gas that has entered the cells through one end face of the honeycomb catalyst body comes in contact with the catalyst supported on the surface of the partition wall so that the exhaust gas can be purified by the catalyst. The exhaust gas thus purified flows to the outside of the honeycomb catalyst body through the other end face of the honeycomb catalyst body.

The catalyst is preferably an oxidizing catalyst that contains platinum and cerium oxide. Unburnt hydrocarbons, carbon monoxide, and PM can be effectively oxidized by utilizing the oxidizing catalyst. Since cerium oxide has an oxygen occlusion function, the oxidizing function can be maintained even when the exhaust gas has become fuel-rich.

It is also preferable that the catalyst be a three-way catalyst that contains at least one noble metal selected from the group consisting of platinum, rhodium, and palladium, and a promoter that contains at least one of cerium oxide and zirconium oxide. Oxidation of nitrogen oxides, reduction of hydrocarbons and carbon monoxide, and oxidation of PM can be achieved at the same time by utilizing such a three-way catalyst. Since cerium oxide has an oxygen occlusion function, the oxidizing function can be maintained even when the exhaust gas has become fuel-rich, and nitrogen oxides can be efficiently reduced even when the exhaust gas has become lean.

It is also preferable that the catalyst be a NOx occlusion/reduction catalyst that contains at least one of an alkali metal and an alkaline earth metal. When using such a NOx occlusion/reduction catalyst, nitrogen oxides can be reduced even under conditions where a three-way catalyst does not function due to a high air/fuel ratio of exhaust gas.

It is preferable that the catalyst layer further contain a promoter that contains at least one compound selected from the group consisting of alumina, zirconia, and ceria, and a holding material that holds the catalyst and the promoter. The exhaust gas purification efficiency is improved by adding the promoter and the holding material to the catalyst layer.

The holding material is not particularly limited insofar as the holding material can hold the catalyst and the promoter. Examples of the holding material include alumina, magnesium oxide, silica, cerium oxide, zirconium oxide, titania, and the like. Among these, it is preferable to use $\gamma$-alumina that can stably maintain a large specific surface area. These materials may be used either individually or in combination.

The density of the catalyst layer is preferably 80 to 400 g/L, more preferably 100 to 300 g/L, and particularly preferably 150 to 250 g/L. If the density of the catalyst layer is less than 80 g/L, the distance between the noble metal particles dispersed in the catalyst layer decreases so that the catalyst may thermally deteriorate. If the density of the catalyst layer is more than 400 g/L, the pores formed in the partition wall may be clogged so that the pressure loss may increase.

The catalyst layer is preferably a porous layer that has a number of pores. When using such a porous catalyst layer, exhaust gas that passes through the partition wall also passes through the catalyst layer supported on the surface of the partition wall (i.e., exhaust gas efficiently comes in contact with the catalyst contained in the catalyst layer) so that a high purification efficiency is achieved. Since it suffices that exhaust gas comes in contact with the catalyst inside the catalyst layer, the catalyst layer substantially need not be supported on the inner surface of the pores formed in the partition wall. This makes it unnecessary to cause the catalyst layer to be uniformly supported on the inner surface of the pores formed in the partition wall when producing the honeycomb catalyst body, and prevents a problem in which the pores become narrow due to the catalyst layer supported on the inner surface of the pores formed in the partition wall so that the exhaust gas flow resistance increases.

The average pore size of the catalyst layer is preferably 10 $\mu$m or more, and more preferably 40 $\mu$m or more. The porosity of the catalyst layer is preferably 40% or more, and more preferably 50% or more. If the average pore size or the porosity is less than the above value, the flow resistance may increase to a large extent when exhaust gas passes through the catalyst layer so that the pressure loss may increase.

The pore size of the catalyst layer used herein refers to a value measured by image analysis. Specifically, when the thickness of the catalyst layer is referred to as "$t_2$", at least twenty $t_2 \times t_2$ areas of an SEM photograph of the cross section of the catalyst layer are observed. The maximum linear void distance is measured in each area, and half of the average value of the maximum linear distances measured for all of the areas is taken as the average pore size. The porosity of the catalyst layer used herein refers to a value measured by image analysis in the same manner as the pore size of the catalyst layer. Specifically, when the thickness of the catalyst layer is referred to as "$t_2$", at least five $t_2 \times t_2$ areas of an SEM photograph of the cross section of the catalyst layer are observed. The void area ratio is measured in each area, and the average value of the void area ratios measured for all of the areas is taken as the porosity.

The thickness of the catalyst layer is preferably 20 $\mu$m or more, more preferably 50 to 100 $\mu$m, and particularly preferably 60 to 80 $\mu$m. In the honeycomb catalyst body according to the present invention, since exhaust gas mainly comes in contact with the catalyst inside the catalyst layer (i.e., the purification reaction mainly occurs inside the catalyst layer), the catalyst layer must have a thickness required to provide a sufficient contact area. If the thickness of the catalyst layer is less than 20 $\mu$m, a sufficient contact area may not be obtained.

[2] Method of producing honeycomb structure

The honeycomb catalyst body according to the present invention may be produced as follows, for example. A cordierite-forming raw material is provided as a material for kneaded clay. The cordierite-forming raw material is prepared by mixing a silica source component, a magnesia source component, an alumina source component, and the like in a cordierite crystal theoretical composition. It is preferable to use quartz or fused silica as the silica source component. The average particle size of the silica source component is preferably 100 to 150 $\mu$m.

Examples of the magnesia source component include talc, magnesite, and the like. Among these, talc is preferable. The content of talc in the cordierite-forming raw material is preferably 37 to 43 mass%. The average particle size of talc is preferably 5 to 50 $\mu$m, and more preferably 10 to 40 $\mu$m. The magnesia (MgO) source component may contain $Fe_2O_3$, CaO, $Na_2O$, $K_2O$, and the like as impurities.

The alumina source component preferably contains at least one of aluminum oxide and aluminum hydroxide due to a low impurity content. The content of aluminum hydroxide in the cordierite-forming raw material is preferably 10 to 30 mass%, and the content of aluminum oxide in the cordierite-forming raw material is preferably 0 to 20 mass%.

A material for kneaded clay (additive) added to the cordierite-forming raw material is also provided. At least a binder and a pore-forming material are used as additives. A dispersant and a surfactant may be used in addition to the binder and the pore-forming material.

A low-melting-point reactant may be used as the pore-forming material. The low-melting-point reactant may be at least one metal selected from the group consisting of iron, copper, zinc, lead, aluminum, and nickel, an alloy that contains the above metal as the main component (e.g., carbon steel, cast iron, or stainless steel when using iron), or an alloy that contains two or more of the above metals as the main component. The low-melting-point reactant is preferably a powdery or fibrous iron alloy. The particle size or the fiber diameter (average diameter) of the iron alloy is preferably 10 to 200 $\mu$m. The low-melting-point reactant may have a spherical shape, a diamond shape, or the like. The shape of the pores can be easily controlled if the low-melting-point reactant has such a shape.

Examples of the binder include hydroxypropyl methyl cellulose, methyl cellulose, hydroxyethyl cellulose, carboxymethyl cellulose, polyvinyl alcohol, and the like. Examples of the dispersant include dextrin, a polyalcohol, and the like. Examples of the surfactant include a fatty acid soap and the like. These additives may be used either individually or in combination.

100 parts by mass of the cordierite-forming raw material, 3 to 8 parts by mass of the binder, 3 to 40 parts by mass of the pore-forming material, 0.1 to 2 parts by mass of the dispersant, and 10 to 40 parts by mass of water are mixed and kneaded to obtain a kneaded clay.

The kneaded clay is formed into a honeycomb shape by an extrusion forming method, an injection forming method, a press forming method, or the like to obtain a honeycomb formed body. It is preferable to use the extrusion forming method since the kneaded clay can be continuously formed, and cordierite crystals can be oriented. The extrusion forming method may be implemented using a vacuum kneader, a ram extruder, a twin-screw continuous extruder, or the like.

The honeycomb formed body is then dried and fired to obtain an intermediate honeycomb structure. The honeycomb formed body may be dried by hot-air drying, microwave drying, dielectric drying, drying under reduced pressure, vacuum drying, freeze drying, or the like. It is preferable to dry the honeycomb formed body by hot-air drying and microwave drying or dielectric drying since the entire honeycomb formed body can be dried quickly and uniformly. The dried honeycomb formed body is fired to obtain an intermediate honeycomb structure provided with a partition wall having pores with an average pore size of 8 to 300 μm. The honeycomb formed body formed using the cordierite-forming raw material is normally fired at 1410 to 1440°C for 3 to 15 hours in the air.

When using the low-melting-point reactant as the pore-forming material, the partition wall has large pores (average pore size: about 100 to 300 μm). When forming large pores in the partition wall using the low-melting-point reactant, a slurry that contains filling particles having an average particle size of 5 to 20 μm is prepared, and the pores formed in the partition wall are filled with the slurry. The honeycomb formed body is then dried and fired to reduce the average pore size of the pores formed in the partition wall. The filling particles may be formed of the same material as the material for the honeycomb structure. Specific examples of the material for the filling particles include cordierite, SiC, aluminum titanate, and the like. The pores may be filled with the slurry by a pressurization method, a suction method, or the like. The average pore size of the partition wall may be adjusted by adjusting the particle size of the filling particles. FIG 4 shows an example in which the partition wall body 21 in which the large pores 27 are formed is obtained using the low-melting-point reactant as the pore-forming material, and the large pores 27 formed in the partition wall body 21 are filled with the filling particles 22 to obtain the partition wall 4.

A honeycomb structure (honeycomb structure body) in which the cells are not plugged is thus obtained.

A raw material for the plugging section is provided. The material for the plugging sections (i.e., plugging slurry) may be the same as or different from the material for kneaded clay used for the honeycomb structure body. Specifically, the material for the plugging section (i.e., plugging slurry) may be obtained by mixing a ceramic raw material, a surfactant, and water optionally together with a sintering aid, a pore-forming agent, and the like to prepare a slurry, and kneading the slurry using a mixer or the like.

The cells that are not to be plugged are masked on one end face of the honeycomb structure body, and the one end face of the honeycomb structure body is immersed in the plugging slurry in a container to fill the unmasked cells with the plugging slurry. The honeycomb structure body is then dried and fired to obtain a honeycomb structure body (i.e., honeycomb structure) provided with the plugging sections. The drying/firing conditions may be the same as the drying/firing conditions for the honeycomb formed body.

A catalyst layer material (slurry) that contains an organic pore-forming material and a catalyst is applied to the surface of the partition wall of the honeycomb structure. The honeycomb structure is heated to a given temperature during or after drying the catalyst layer material to oxidize and remove the organic pore-forming material to form pores in the catalyst layer. A honeycomb catalyst body that includes the honeycomb structure and the catalyst layer that is supported on the surface of the partition wall and contains the catalyst is thus obtained.

In order to adjust the average pore size and the porosity of the catalyst layer to desired values, it is preferable that the average particle size of the disaggregated particles contained in the slurry raw material be equal to or larger than the average particle size of the partition wall material. If the average particle size of the disaggregated particles contained in the slurry raw material is equal to or larger than the average particle size of the partition wall, the disaggregated particles do not easily enter the pores formed in the partition wall. Therefore, the slurry can be easily applied to the surface of the partition wall. Specifically, if the average particle size of the disaggregated particles is equal to or larger than 1/4 of the average pore size of the partition wall, the disaggregated particles are crosslinked at the entrance of the pores formed in the partition wall and do not easily enter the pores. Therefore, the slurry can be applied to the surface of the partition wall.

As the organic pore-forming material, starch, a resin foam, or the like may be suitably used. Resin particles that can be removed by heating at 700°C or less may be added as the pore-forming material.

The catalyst layer material may be applied by a known method. For example, a dipping method, a suction method, or the like may be used.

The porosity of the catalyst layer may be adjusted by adjusting the amount of pore-forming material and the like. The average pore size of the catalyst layer may be adjusted by adjusting the average particle size of the oxide that mainly forms the catalyst layer material, for example. When it is desired to obtain a catalyst layer having an average pore size of 40 μm, for example, oxide particles having an average particle size of 40 μm are used for the catalyst layer material. The catalyst layer material (slurry) may be applied to the surface of the partition wall of the honeycomb structure by a suction method or the like.

EXAMPLES

The present invention is further described below by way of examples. Note that the present invention is not limited to the following examples.

Hydraulic diameter (m) of cells

The cell open area (cross-sectional area) in a cross section perpendicular to the cell extension direction, and the length (circumferential length) of the closed line forming the cell in a cross section perpendicular to the cell extension direction were measured for a plurality of (20) cells. The average value of the values calculated by "4 $\times$ (cross-sectional area) / (circumferential length)" was taken as the hydraulic diameter (m) of the cells.

Permeability ($m^2$)

The permeability was calculated as follows. As shown in FIG 6, a honeycomb catalyst body 300 was cut into a specimen 200 so that the part (rib 105) of the partition wall 4 remained to have a rib height H of 0.2 mm. The specimen 200 may have a rectangular shape or a disc-like shape. Air at room temperature was passed through the specimen 200, and the permeability was calculated by the following expression (1). FIG 6 is a schematic view illustrative of the specimen used to measure the permeability.

$$C = \frac{8\,F\,T\,V}{\pi D^2 (P^2 - 13.839^2) \diagup 13.839 \times 68947.6} \times 10^{-4} \qquad (1)$$

It is desirable to use a fluid seal (e.g., grease) so that air does not leak through the opening between the specimen 200 and a seal formed by the rib 105. The permeability was measured at an air flow rate that was adjusted so that the calculated flow rate through the partition wall was 0.1 to 1 cm/sec.

In the expression (1), C indicates the permeability ($m^2$), F indicates the gas flow rate ($cm^3$/s), T indicates the thickness (cm) of the specimen, V indicates the gas viscosity (dynes·sec/$cm^2$), D indicates the diameter (cm) of the specimen, and P indicates the gas pressure (PSI). In the expression (1), 13.839 PSI equals 1 atm, and 68947.6 dynes·sec/$cm^2$ equals I PSI.

The permeability was measured using a "Capillary Flow Porometer 1100AEX" (manufactured by Porous Materials, Inc.). The permeability ($m^2$) of the honeycomb structure was measured in the same manner as described above.

Thickness ($\mu$m) of partition wall

One end face of the honeycomb catalyst body was observed using a scanning electron microscope (SEM). The thickness was measured for an arbitrarily selected ten areas of the partition wall, and the average thickness was taken as the thickness of the partition wall.

Average pore size ($\mu$m)

The pore size (pore size calculated from the pressure when the cumulative mercury volume injected into a porous substrate reached 50% of the total pore volume of the porous substrate) was measured using a mercury porosimeter (mercury intrusion method). As the mercury porosimeter, an "Auto Pore III 9405" (manufactured by Micrometrics) was used.

Porosity (%)

The porosity was measured using a mercury porosimeter (mercury intrusion method) in the same manner as the average pore size.

Cell density

One end face of the honeycomb catalyst body was observed using a scanning electron microscope (SEM). The number of cells present in an arbitrarily selected area was measured to calculate the cell density.

Cell open frontal area

The ratio of the total open area of the cells to the sum of the cross-sectional area of the partition wall and the total open area of the cells in the cross section perpendicular to the cell extension direction was calculated, and taken as the cell open frontal area.

Thermal expansion coefficient

The thermal expansion coefficient was measured by push-rod dilatometry.

Pressure loss

Air was circulated through the honeycomb catalyst body at room temperature at a flow rate of 0.5 m$^3$/min to measure the pressure loss. The pressure loss (reference pressure loss) of a comparative honeycomb catalyst body having an identical shape, an identical cell density, and an identical partition wall thickness was measured, and the ratio (pressure drop increase rate (%)) with respect to the reference pressure loss was calculated. A case where the pressure drop increase rate was 20% or more was evaluated as "Bad", and a case where the pressure drop increase rate was less than 20% was evaluated as "Good".

PM collection efficiency

Exhaust gas discharged from a diesel burner was introduced into the honeycomb catalyst body at a particulate matter (PM) concentration of 1 mg/m$^3$, a temperature of 200°C, and a flow rate of 2.4 Nm$^3$/min, and the number of PM (PM particle count) was measured on the upstream side (before the exhaust gas was introduced into the honeycomb catalyst body) and the downstream side (after the exhaust gas was discharged from the honeycomb catalyst body). The PM collection efficiency was calculated by "((upstream-side PM particle count) - (downstream-side PM particle count)) / (upstream-side PM particle count) $\times$ 100". The PM particle count was measured using a "Scanning Mobility Particle Sizer (SMPS)" (manufactured by TSI). A case where the PM collection efficiency was 80% or more was evaluated as "Good", and a case where the PM collection efficiency was less than 80% was evaluated as "Bad".

Hydrostatic strength

A hydrostatic pressure was applied to the outer circumferential surface of the honeycomb structure covered with rubber, and the pressure when the honeycomb structure broke was measured. A case where the honeycomb structure broke at a pressure of less than 2.0 MPa was evaluated as "Bad", and a case where the honeycomb structure broke at a pressure of 2.0 MPa or more was evaluated as "Good".

Clogging of partition wall due to soot

The honeycomb structure was installed in the exhaust system of an automobile equipped with a direct-injection gasoline engine (displacement: 2.0 L) at a position under the floor. The automobile was operated on a chassis dynamo five times in the European NEDC mode. A case where the pressure loss increase rate was less than 1.1% was evaluated as "Good", and a case where the pressure loss increase rate was 1.1 % or more was evaluated as "Bad".

Exhaust gas purification performance

The honeycomb structure was installed in the exhaust system of an automobile equipped with a direct-injection gasoline engine (displacement: 2.0 L) at a position under the floor. The automobile was operated on a chassis dynamo in the European NEDC mode to measure the emissions of carbon monoxide, unburnt hydrocarbons, and nitrogen oxides. The emissions of carbon monoxide, unburnt hydrocarbons, and nitrogen oxides were also measured using a flow-through honeycomb catalyst body (partition wall thickness: 100 $\mu$m, cell density: 93 cells/cm$^2$) supporting an identical amount of an identical catalyst. The measured emission values were then compared. A case where the emissions were larger than those of the comparative honeycomb catalyst body was evaluated as "Bad", and a case where the emissions were smaller than those of the comparative honeycomb catalyst body was evaluated as "Good".

Reference Example 1

A raw material was prepared as shown in Table 1 (average particle size and mixing ratio). Specifically, 39.7 mass% of talc (average particle size: 22 $\mu$m), 51.2 mass% of kaolin (average particle size: 7 $\mu$m), 5.5 mass% of aluminum oxide (average particle size: 6 $\mu$m), and 12.7 mass% of aluminum hydroxide (average particle size: I $\mu$m) were mixed to prepare a material for kneaded clay.

100 parts by mass of the material for kneaded clay, 8 parts by mass of hydroxypropyl methyl cellulose (binder), 0.1 parts by mass of potassium laurate soap (dispersant), and 35 parts by mass of water were mixed and kneaded to obtain a kneaded clay having plasticity. The kneaded clay was formed into a cylindrical shape using a vacuum deairing machine, and formed into a honeycomb shape having a given partition wall thickness and a given cell density using an extruder to obtain a honeycomb formed body. The honeycomb formed body was dielectric-dried, hot-air-dried, and fired at 1420°C for 10 hours to obtain an intermediate honeycomb structure provided with a partition wall having pores with an average pore size of 8 to 30 $\mu$m.

The end faces of the honeycomb structure body were plugged alternately (in a checkered pattern) using the same material (plugging slurry) as the material for kneaded clay , and the intermediate honeycomb structure was fired at 1420°C for four hours to obtain a honeycomb structure. The honeycomb structure had a diameter of 105 mm, a length of 114 mm, and a plugging depth of 5 mm. The honeycomb structure was subjected to the above measurements and evaluations.

The honeycomb structure of this reference example had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, a partition wall average pore size of 13 $\mu$m, a partition wall porosity of 27%, a partition wall permeability of $1.56\times10^{-12}$ , and a value "(hydraulic diameter of cells)$^2$ / (permeability)" of $1.32\times10^6$. The pressure loss evaluation result was "Good", the PM collection efficiency evaluation result was "Good", the partition wall strength evaluation result was "Good", and the partition wall clogging evaluation result was also "Good".

Reference Examples 2 to 4, 6 to 9, and 11 to 25

In Reference Examples 2 to 4, 6 to 9, and 11 to 25, a kneaded clay was prepared in the same manner as in Reference Example 1, except that the mixing ratio and the raw material particle size were changed as shown in Table 1. A honeycomb structure shown in Table 2 was obtained in the same manner as in Reference Example 1. The measurement and evaluation results for the resulting honeycomb structure are shown in Tables 2 and 3.

TABLE 1

| | | Main raw material | | | | | | Pore-forming material | |
|---|---|---|---|---|---|---|---|---|---|
| | | Talc | Kaolin | Quartz | Fused silica | oxide | Aluminum hydroxide | Iron powder | Graphite |
| | | mass% (average particle size) | mass% (average particle size) | mass% (average particle size) | mass% (average particle size) | mass% (average particle size) | mass% (average particle size) | mass% (average particle size) | mass% (average particle size) |
| | Reference Example 1 | 39.7 (22 $\mu$m) | 51.2 (7 $\mu$m) | 0 | 0 | 5.5 (6 $\mu$m) | 12.7 (1 $\mu$m) | 0 | 0 |
| | Reference Example 2 | 39.7 (22 $\mu$m) | 51.2 (7 $\mu$m) | 0 | 0 | 5.5 (6 $\mu$m) | 12.7 (1 $\mu$m) | 0 | 0 |
| | Reference Example 3 | 39.7 (22 $\mu$m) | 51.2 (7 $\mu$m) | 0 | 0 | 5.5 (6 $\mu$m) | 12.7 (1 $\mu$m) | 0 | 0 |
| | Reference Example 4 | 39.7 (22 $\mu$m) | 51.2 (7 $\mu$m) | 0 | 0 | 5.5 (6 $\mu$m) | 12.7 (1 $\mu$m) | 0 | 0 |
| | Reference Example 5 | 40(32 $\mu$m) | 19 (35 $\mu$m) | 12 (116 $\mu$m) | - | 14 (6 $\mu$m) | 15 (3 $\mu$m) | 20 (30 $\mu$m) | 0 |
| | Reference Example 6 | 39.7 (22 $\mu$m) | 51.2 (7 $\mu$m) | 0 | 0 | 5.5 (6 $\mu$m) | 12.7 (1 $\mu$m) | 0 | 0 |
| | Reference Example 7 | 39.7 (22 $\mu$m) | 51.2 (7 $\mu$m) | 0 | 0 | 5.5 (6 $\mu$m) | 12.7 ( $\mu$m) | 0 | 0 |
| | Reference Example 8 | 39.7 (22 $\mu$m) | 51.2 (7 $\mu$m) | 0 | 0 | 5.5 (6 $\mu$m) | 12.7 (1 $\mu$m) | 0 | 0 |

(continued)

| | | Main raw material | | | | | | Pore-forming material | |
|---|---|---|---|---|---|---|---|---|---|
| | | Talc | Kaolin | Quartz | Fused silica | oxide | Aluminum hydroxide | Iron powder | Graphite |
| | | mass% (average particle size) | mass% (average particle size) | mass% (average particle size) | mass% (average particle size) | mass% (average particle size) | mass% (average particle size) | mass% (average particle size) | mass% (average particle size) |
| Reference Example 9 | | 39.4 (22 μm) | 21.5 (7 μm) | 0 | 10 (30 μm) | 8.7 (6 μm) | 20.3 ( 1 μm) | 0 | 0 |
| Reference Example 10 | | 40 (35 μm) | 19 (35 μm) | 12 (116 μm) | - | 14 (6 μm) | 15 (3 μm) | 20 (30 μm) | 0 |
| Reference Example 11 | | 39.7 (22 μm) | 51.2 (7 μm) | 0 | 0 | 18.2 (6 μm) | 0 | 0 | 0 |
| Reference Example 12 | | 39.7 (22 μm) | 51.2 (7 μm) | 0 | 0 | 18.2 (6 μm) | 0 | 0 | 0 |
| Reference Example 13 | | 39.7 (22 μm) | 51.2 (7 μm) | 0 | 0 | 18.2 (6 μm) | 0 | 0 | 0 |
| Reference Example 14 | | 39.7 (22 μm) | 51.2 (7 μm) | 0 | 0 | 18.2 (6 μm) | 0 | 0 | 0 |
| Reference Example 15 | | 39.7 (22 μm) | 51.2 (7 μm) | 0 | 0 | 18.2 (6 μm) | 0 | 0 | 0 |
| Reference Example 16 | | 39.4 (22 μm) | 21.5 (7 μm) | 0 | 10 (30 μm) | 29.0 (6 μm) | 0 | 0 | 0 |
| Reference Example 17 | | 39.6 (32 μm) | 31.8 (7 μm) | 0 | 5 (30 μm) | 7.1 (6 μm) | 16.5 (1 μm) | 0 | 0) |
| Reference Example 18 | | 39.7 (22 μm) | 51.2 (7 μm) | 0 | 0 | 18.2 (6 μm) | 0 | 0 | 0 |
| Reference Example 19 | | 39.7 (50 μm) | 51.2 (7 μm) | 0 | 0 | 18.2 (6 μm) | 0 | 0 | 10 (50 μm) 1 |
| Reference Example 20 | | 40 (35 μm) | 19 (7 μm) | 12 (116 μm) | - | 14 (6 μm) | 15 (3 μm) | 0 | 0 |
| Reference Example 21 | | 39.7 (50 μm) | 51.2 (7 μm) | 0 | 0 | 18.2 (6 μm) | 0 | 0 | 10 (50 μm) 0 |
| Reference Example 22 | | 40 (20 μm) | 19 (7 μm) | 12 (116 μm) | - | 14 (6 μm) | 15 (3 μm) | 0 | 0 |

(continued)

| | | Main raw material | | | | | Pore-forming material | |
|---|---|---|---|---|---|---|---|---|
| | Talc | Kaolin | Quartz | Fused silica | oxide | Aluminum hydroxide | Iron powder | Graphite |
| | mass% (average particle size) | mass% (average particle size) | mass% (average particle size) | mass% (average particle size) | mass% (average particle size) | mass% (average particle size) | mass% (average particle size) | mass% (average particle size) |
| Reference Example 23 | 39.4 (22 μm) | 21.5 (7 μm) | 0 | 10 (30 μm) | 29.1 (6 μm) | 0 | 0 | 0 |
| Reference Example 24 | 39.4 (22 μm) | 21.5 (7 μm) | 0 | 10 (30 μm) | 29. 1 (6 μm) | 0 | 0 | 0 |
| Reference Example 25 | 39.4 (22 μm) | 21.5 (7 μm) | 0 | 10 (30 μm) | 29. 1 (6 μm) | 0 | 0 | 0 |

TABLE 2

| | Rib thickness | | Cell density | | Cell hydraulic diameter (d) (m) (d) | Open frontal area (OFA) | Pore size ($\mu$m) | Porosity (%) | Partition wall permeability ($m_2$) | $d^1/P$ |
|---|---|---|---|---|---|---|---|---|---|---|
| | (mil) | ($\mu$m) | (cpsi) | (/cm$^2$) > | | | | | | |
| Reference Example 1 | 3.2 | 8.128 | 280 | 43.4 | 0.00144 | 89.6 | 13 | 27 | $1.56\times10^{-12}$ | $1.32\times10^6$ |
| Reference Example 2 | 3.5 | 8.890 | 250 | 38.8 | 0.00152 | 89.2 | 13 | 27 | $1.56\times10^{-12}$ | $1.48\times10^6$ |
| Reference Example 3 | 4.5 | 11.430 | 180 | 27.9 | 0.00178 | 88.3 | 13 | 27 | $1.56\times10^{-12}$ | $2.0\times10^6$ |
| Reference Example 4 | 4.5 | 11.430 | 200 | 31.0 | 0.00168 | 87.7 | 13 | 27 | $1.56\times10^{-12}$ | $1.81\times10^6$ |
| Reference Example 5 | 4.5 | 11.430 | 200 | 31.0 | 0.00168 | 87.7 | 20 | 15 | $2.05\times10^{-12}$ | $1.38\times10^6$ |
| Reference Example 6 | 4.5 | 11.430 | 200 | 31.0 | 0.00168 | 87.7 | 13 | 30 | $1.73 \times 10^{-12}$ | $1.63\times10^6$ |
| Reference Example 7 | 4.5 | 11.430 | 200 | 31.0 | 0.00168 | 87.7 | 11 | 33 | $1.37\times10^{-12}$ | $2.07\times10^6$ |
| Reference Example 8 | 4.5 | 11.430 | 200 | 31.0 | 0.00168 | 87.7 | 11 | 27 | $1.12 \times 10^{-12}$ | $2.53 \times 10^6$ |
| Reference Example 9 | 4.5 | 11.430 | 200 | 31.0 | 0.00168 | 87.7 | 9.5 | 34 | $1.05\times10^{-12}$ | $2.70x\ 10^6$ |
| Reference Example 10 | 4.5 | 11.430 | 200 | 31.0 | 0.00168 | 87.7 | 27 | 11 | $2.74\times10^{-12}$ | $1.03\times10^6$ |
| Reference Example 11 | 6.7 | 17.018 | 100 | 15.5 | 0.00237 | 87.0 | 13 | 27 | $1.56\times10^{-12}$ | $3.60\times10^6$ |
| Reference Example 12 | 7.9 | 20.320 | 80 | 12.4 | 0.00264 | 86.2 | 13 | 27 | $1.56\times10^{-12}$ | $4.46\times10^6$ |
| Reference Example 13 | 6.7 | 17.018 | 100 | 15.5 | 0.00237 | 87.0 | 13 | 27 | $1.56\times10^{-12}$ | $3.60\times10^6$ |
| Reference Example 14 | 6 | 15.240 | 100 | 15.5 | 0.00239 | 88.4 | 13 | 27 | $1.56\times10^{-12}$ | $3.66\times10^6$ |

| | Rib thickness | | Cell density | | Cell hydraulic diameter (d) (m) (d) | Open frontal area (OFA) | Pore size ($\mu$m) | Porosity (%) | Partition wall permeability (m$_2$) | d$^1$/P |
|---|---|---|---|---|---|---|---|---|---|---|
| | (mil) | ($\mu$m) | (cpsi) | (/cm$^2$) > | | | | | | |
| Reference Examples 15 | 5.2 | 13.208 | 100 | 15.5 | 0.00241 | 89.9 | 13 | 27 | $1.56 \times 10^{-12}$ | $3.72 \times 10^6$ |
| Reference Example 16 | 5 | 12.700 | 150 | 23.3 | 0.00195 | 88.1 | 14 | 27 | $1.81 \times 10^{-12}$ | $2.10 \times 10^6$ |
| Reference Example 17 | 6.5 | 16.510 | 170 | 26.4 | 0.00178 | 83.8 | 15 | 27 | $2.08 \times 10^{-12}$ | $1.53 \times 10^6$ |
| Reference Example 18 | 1.5 | 3.810 | 180 | 27.9 | 0.00186 | 96.0 | 7 | 27 | $4.52 \times 10^{-13}$ | $7.61 \times 10^6$ |
| Reference Example 19 | 12 | 30.480 | 300 | 46.5 | 0.00116 | 62.8 | 38 | 40 | $1.97 \times 10^{-11}$ | $6.83 \times 10^4$ |
| Reference Example 20 | 12 | 30.480 | 300 | 46.5 | 0.00116 | 62.8 | 38 | 15 | $7.41 \times 10^{-12}$ | $1.82 \times 10^5$ |
| Reference Example 21 | 12 | 30.48 | 70 | 10.9 | 0.00273 | 80.9 | 7 | 40 | $6.70 \times 10^{-13}$ | $1.11 \times 10^7$ |
| Reference Example 22 | 17 | 43.18 | 70 | 10.9 | 0.00260 | 73.6 | 5 | 9 | $7.69 \times 10^{-14}$ | $8.82 \times 10^7$ |
| Reference Example 23 | 7.2 | 18.288 | 300 | 46.5 | 0.00128 | 76.6 | 6 | 27 | $3.32 \times 10^{-13}$ | $4.96 \times 10^6$ |
| Reference Example 24 | 8 | 20.32 | 300 | 46.5 | 0.00126 | 74.2 | 5 | 32 | $2.74 \times 10^{-13}$ | $5.84 \times 10^6$ |
| Reference Example 25 | 9 | 22.86 | 300 | 46.5 | 0.00124 | 71.3 | 5 | 32 | $2.74 \times 10^{-13}$ | $5.60 \times 10^6$ |

TABLE 3

|  | Pressure loss | PM collection efficiency | Hydrostatic strength | Clogging of partition wall due to soot |
|---|---|---|---|---|
| Reference Example 1 | Good | Good | Good | Good |
| Reference Example 2 | Good | Good | Good | Good |
| Reference Example 3 | Good | Good | Good | Good |
| Reference Example 4 | Good | Good | Good | Good |
| Reference Example 5 | Good | Good | Good | Good |
| Reference Example 6 | Good | Good | Good | Good |
| Reference Example 7 | Good | Good | Good | Good |
| Reference Example 8 | Good | Good | Good | Good |
| Reference Example 9 | Good | Good | Good | Good |
| Reference Example 10 | Good | Good | Good | Good |
| Reference Example 11 | Good | Good | Good | Good |
| Reference Example 12 | Good | Good | Good | Good |
| Reference Example 13 | Good | Good | Good | Good |
| Reference Example 14 | Good | Good | Good | Good |
| Reference Example 15 | Good | Good | Good | Good |
| Reference Example 16 | Good | Good | Good | Good |
| Reference Example 17 | Good | Good | Good | Good |
| Reference Example 18 | Bad | Bad | Bad | Bad |
| Reference Example 19 | Bad | Bad | Good | Bad |
| Reference Example 20 | Bad | Bad | Good | Bad |
| Reference Example 21 | Bad | Good | Good | Bad |
| Reference Example 22 | Bad | Good | Good | Bad |
| Reference Example 23 | Bad | Good | Good | Bad |
| Reference Example 24 | Bad | Good | Good | Bad |
| Reference Example 25 | Bad | Good | Good | Bad |

(Reference Examples 5 and 10)

As shown in Table 1, 40 mass% of talc (average particle size: 32 $\mu$m) (talc having an average particle size of 35 $\mu$m was used in Reference Example 10), 19 mass% of kaolin (average particle size: 35 $\mu$m), 12 mass% of quartz (average particle size: 116 $\mu$m), 14 mass% of aluminum oxide (average particle size: 6 $\mu$m), 15 mass% of aluminum hydroxide (average particle size: 3 $\mu$m), and 20 mass% of iron powder (pore-forming material) (average particle size: 30 $\mu$m) were mixed to prepare a material for kneaded clay.

The material for kneaded clay was processed in the same manner as in Reference Example 1 to obtain an intermediate honeycomb structure provided with a partition wall having pores with an average pore size of 100 to 300 $\mu$m.

A slurry containing cordierite particles having an average particle size of 20 $\mu$m was prepared. The pores formed in the partition wall of the intermediate honeycomb structure were filled with the slurry. The intermediate honeycomb structure was then dried and fired under the same conditions as those for the honeycomb formed body to obtain a honeycomb structure (i.e., honeycomb structure body) in which the cells were not plugged. The measurement and evaluation results for the resulting honeycomb structure are shown in Tables 2 and 3.

Example 1

A honeycomb structure was obtained in the same manner as in Reference Example 1, except that the conditions were changed as shown in Table 4. A catalyst layer material (catalyst slurry) containing an oxidizing catalyst (platinum and alumina) and an organic pore-forming material (polymer particles) was applied to and supported on the surface of the partition wall of the honeycomb structure by a suction method so that the density was 200 g/L. The honeycomb structure was dried at a given temperature to oxidize and remove the organic pore-forming material. A honeycomb catalyst body including a porous catalyst layer supported on the surface of the partition wall of the honeycomb structure was thus obtained.

The honeycomb catalyst body of this example had a partition wall thickness of 81.3 $\mu$m (3.2 mil), a cell density of 43.4 cells/cm$^2$ (280 cpsi), a cell hydraulic diameter of 0.00144 m, a cell open frontal area of 89.6%, a partition wall average pore size of 13 $\mu$m, a partition wall porosity of 27%, a partition wall permeability of 1.25x,o-l 2, and a value "(hydraulic diameter of cells)$^2$ / (permeability)" of 1.65$\times$ 10$^6$. The pressure loss evaluation result was "Good", the PM collection efficiency evaluation result was "Good", the partition wall strength evaluation result was "Good", the partition wall clogging evaluation result was "Good", and the exhaust gas purification performance evaluation result was also "Good".

Examples 2 to 16 and Comparative Examples 1 to 8

Honeycomb catalyst bodies of Examples 2 to 16 and Comparative Examples 1 to 8 were obtained in the same manner as in Example 1, except that the conditions were changed as shown in Table 4. The honeycomb catalyst bodies were evaluated in the same manner as described above. The measurement results are shown in Table 5, and the evaluation results are shown in Table 6.

TABLE 4

| | Main raw material | | | | | | Pore-forming material | |
|---|---|---|---|---|---|---|---|---|
| | Talc | Kaolin | Quartz | Fused silica | Aluminum oxide | Aluminum hydroxide | Iron powder | Graphite |
| | mass% (average particle size) | mass% (average particle size) | mass% (average particle size) | mass% (average particle size) | mass%(average particle size) | mass%(average particle size) | mass% (average particle size) | mass% (average particle size) |
| Example 1 | 39.7 (22 $\mu$m) | 51.2 (7 $\mu$m) | 0 | 0 | 5.5 (6 $\mu$m) | 12.7 (1 $\mu$m) | 0 | 0 |
| Example 2 | 39.7 (22 $\mu$m) | 51.2 (7 $\mu$m) | 0 | 0 | 5.5 (6 $\mu$m) | 12.7 (1 $\mu$m) | 0 | 0 |
| Example 3 | 39.7 (22 $\mu$m) | 51.2 (7 $\mu$m) | 0 | 0 | 5.5 (6 $\mu$m) | 12.7 ( 1 $\mu$m) | 0 | 0 |
| Example 4 | 39.7 (22 $\mu$m) | 51.2 (7 $\mu$m) | 0 | 0 | 5.5 (6 $\mu$m) | 12.7 (1 $\mu$m) | 0 | 0 |
| Example 5 | 40 (32 pm) | 19 (35 $\mu$m) | 12 (116 $\mu$m) | - | 14 (6 $\mu$m) | 15 (3 $\mu$m) | 20 (30 pm) | 0 |
| Example 6 | 39.7 (22 $\mu$m) | 51.2 (7 $\mu$m) | 0 | 0 | 5.5 (6 $\mu$m) | 1 2.7 ($\mu$m) | 0 | 0 |
| Example 7 | 39.7 (22 $\mu$m) | 51.2 (7 $\mu$m) | 0 | 0 | 5.5 (6 $\mu$m) | 12.7 (1 $\mu$m) | 0 | 0 |
| Example 8 | 39.7 (22 $\mu$m) | 51.2 (7 $\mu$m) | 0 | 0 | 5.5 (6 $\mu$m) | 12.7 (1 $\mu$m) | 0 | 0 |
| Example 9 | 39.4 (22 $\mu$m) | 21.5 (7 $\mu$m) | 0 | 10 (30 $\mu$m) | 8.7 (6 $\mu$m) | 20.3 (1$\mu$m) | 0 | 0 |
| Example 10 | 39.7 (22 $\mu$m) | 51.2 (7 $\mu$m) | 0 | 0 | 18.2 (6 $\mu$m) | 0 | 0 | 0 |
| Example 11 | 39.7 (22 $\mu$m) | 51.2 (7 $\mu$m) | 0 . | 0 | 18.2 (6 $\mu$m) | 0 | 0 | 0 |
| Example 12 | 39.7 (22 $\mu$m) | 51.2 (7 $\mu$m) | 0 | 0 | 18.2 (6 $\mu$m) | 0 | 0 | 0 |
| Example 13 | 39.7 (22 $\mu$m) | 51.2 (7 $\mu$m) | 0 | 0 | 18.2 (6 $\mu$m) | 0 | 0 | 0 |
| Example 14 | 39.7 (22 $\mu$m) | 51.2 (7 $\mu$m) | 0 | 0 | 18.2 (6 $\mu$m) | 0 | 0 | 0 |
| Example 15 | 39.4 (22 $\mu$m) | 21.5 (7 $\mu$m) | 0 | 10 (30 $\mu$m) | 29.0 (6 $\mu_1$m) | 0 | 0 | 0 |
| Example 16 | 39.6 (32 $\mu$m) | 31.8 (7 $\mu$m) | 0 | 5 (30 $\mu$m) | 7.1 (6 $\mu$m) | 16.5 (1 $\mu$m) | 0 | 0 |
| Comparative Example 1 | 39.7 (22 $\mu$m) | 51.2 (7 $\mu$m) | 0 | 0 | 18.2 (6 $\mu$m) | 0 | 0 | 0 |
| Comparative Example 2 | 39.7 (50 $\mu$m) | 51.2 (7 $\mu$m) | 0 | 0 | 18.2 (6 $\mu$m) | 0 | 0 | 10 (50 $\mu$m) |

(continued)

| | Main raw material | | | | | | Pore-forming material | |
|---|---|---|---|---|---|---|---|---|
| | Talc | Kaolin | Quartz | Fused silica | Aluminum oxide | Aluminum hydroxide | Iron powder | Graphite |
| | mass% (average particle size) | mass% (average particle size) | mass% (average particle size) | mass% (average particle size) | mass% (average particle size) | mass% (average particle size) | mass% (average particle size) | mass% (average particle size) |
| Comparative Example 3 | 40 (35 $\mu$m) | 19 (7 $\mu$m) | 12 (116 $\mu$m) | - | 14 (6 pm) | 15 (3 $\mu$m) | 0 | 0 |
| Comparative Example 4 | 39.7 (50 $\mu$m) | 51.2 (7 $\mu$m) | 0 | 0 | 18.2 (6 $\mu$m) | 0 | 0 | 10 (50 $\mu$m) |
| Comparative Example 5 | 40 (20 $\mu$m) | 19 (7 $\mu$m) | 12 (116 $\mu$m) | - | 14 (6 $\mu$m) | 15 (3 $\mu$m) | 0 | 0 |
| Comparative Example 6 | 39.4 (22 $\mu$m) | 21.5 (7 $\mu$m) | 0 | 10 (30 $\mu$m) | 29.1 (6 $\mu$m) | 0 | 0 | 0 |
| Comparative Example 7 | 39.4 (22 $\mu$m) | 21.5 (7 $\mu$m) | 0 | 10 (30 $\mu$m) | 29.1 (6 $\mu$m) | 0 | 0 | 0 |
| Comparative Example 8 | 39.4 (22 $\mu$m) | 21.5 (7 $\mu$m) | 0 | 10 (30 $\mu$m) | 29.1 (6 $\mu$m) | 0 | 0 | 0 |

TABLE 5

| | Rib thickness | | Cell density | | Cell hydraulic diameter (d) (m) | Open frontal area (OFA) (%) | Pore size ($\mu$m) | Porosity (%) | Partition wall permeability (m$^2$) | d$^2$/P |
|---|---|---|---|---|---|---|---|---|---|---|
| | (mil) | ($\mu$m) | (cpsi) | (/cm$^2$) | | | | | | |
| Example 1 | 3.2 | 8.1 | 280 | 43.4 | 0.00144 | 89.6 | 13 | 27 | $1.25\times10^{-12}$ | $1.65\times10^6$ |
| Example 2 | 3.5 | 8.9 | 250 | 38.8 | 0.00152 | 89.2 | 13 | 27 | $1.25\times10^{-12}$ | $1.85\times10^6$ |
| Example 3 | 4.5 | 11.4 | 180 | 27.9 | 0.00178 | 88.3 | 13 | 27 | $1.25\times10^{-12}$ | $2.53\times10^6$ |
| Example 4 | 4.5 | 11.4 | 200 | 31.0 | 0.00168 | 87.7 | 13 | 27 | $1.25\times10^{-12}$ | $2.27\times10^6$ |
| Example 5 | 4.5 | 11.4 | 200 | 31.0 | 0.00168 | 87.7 | 20 | 15 | $1.64\times10^{-12}$ | $1.72\times10^6$ |
| Example 6 | 4.5 | 11.4 | 200 | 31.0 | 0.00168 | 87.7 | 13 | 30 | $1.39\times10^{-11}$ | $2.04\times10^6$ |
| Example 7 | 4.5 | 11.4 | 200 | 31.0 | 0.00168 | 87.7 | 11 | 33 | $1.09\times10^{-11}$ | $2.59\times10^6$ |
| Example 8 | 4.5 | 11.4 | 200 | 31.0 | 0.00168 | 87.7 | 11 | 27 | $8.94\times10^{-13}$ | $3.17\times10^6$ |
| Example 9 | 4.5 | 11.4 | 200 | 31.0 | 0.00168 | 87.7 | 9.5 | 34 | $8.39\times10^{-13}$ | $3.37\times10^6$ |
| Example 10 | 6.7 | 17.0 | 100 | 15.5 | 0.00237 | 87.0 | 27 | 11 | $2.19\times10^{-12}$ | $2.56\times10^6$ |
| Example 11 | 7.9 | 20.3 | 80 | 12.4 | 0.00264 | 86.2 | 13 | 27 | $1.25\times10^{-12}$ | $5.57\times10^6$ |
| Example 12 | 6.7 | 17.0 | 100 | 15.5 | 0.00237 | 87.0 | 13 | 27 | $1.25\times10^{-12}$ | $4.50\times10^6$ |
| Example 13 | 6 | 15.2 | 100 | 15.5 | 0.00239 | 88.4 | 13 | 27 | $1.25\times10^{-12}$ | $4.57\times10^6$ |
| Example 14 | 5.2 | 13.2 | 100 | 15.5 | 0.00241 | 89.9 | 13 | 27 | $1.25\times10^{-12}$ | $4.65\times10^6$ |
| Example 15 | 5 | 12.7 | 150 | 23.3 | 0.00195 | 88.1 | 13 | 27 | $1.25\times10^{-12}$ | $3.04\times10^6$ |
| Example 16 | 6.5 | 16.5 | 170 | 26.4 | 0.00178 | 83.8 | 14 | 27 | $1.45\times10^{-12}$ | $2.20\times10^6$ |
| Comparative Example 1 | 1.5 | 3.8 | 180 | 27.9 | 0.00186 | 96.0 | 15 | 27 | $1.66\times10^{-12}$ | $2.07\times10^6$ |
| Comparative Example 2 | 12 | 30.5 | 300 | 46.5 | 0.00116 | 62.8 | 38 | 38 | $1.50\times10^{-11}$ | $8.99\times10^4$ |
| Comparative Example 3 | 12 | 30.5 | 300 | 46.5 | 0.00116 | 62.8 | 38 | 13 | $5.13\times10^{-12}$ | $2.63\times10^5$ |
| Comparative Example 4 | 12 | 30.5 | 70 | 10.9 | 0.00273 | 80.9 | 7 | 38 | $5.10\times10^{-13}$ | $1.47\times10^7$ |

(continued)

| | Rib thickness | | Cell density | | Cell hydraulic diameter (d) (m) | Open frontal area (OFA) (%) | Pore size ($\mu$m) | Porosity (%) | Partition wall permeability (m$^2$) | d$^2$/P |
|---|---|---|---|---|---|---|---|---|---|---|
| | (mil) | ($\mu$m) | (cpsi) | (/cm$^2$) | | | | | | |
| Comparative Example 5 | 17 | 43.2 | 70 | 10.9 | 0.00260 | 73.6 | 5 | 7 | $4.79 \times 10^{-14}$ | $1.42 \times 10^{8}$ |
| Comparative Example 6 | 7.2 | 18.3 | 300 | 46.5 | 0.00128 | 76.6 | 6 | 25 | $2.46 \times 10^{-13}$ | $6.69 \times 10^{6}$ |
| Comparative Example 7 | 8 | 20.3 | 300 | 46.5 | 0.00126 | 74.2 | 5 | 30 | $2.05 \times 10^{-13}$ | $7.78 \times 10^{6}$ |
| Comparative Example 8 | 9 | 22.9 | 300 | 46.5 | 0.00124 | 71.3 | 5 | 30 | $2.05 \times 10^{-13}$ | $7.47 \times 10^{6}$ |

TABLE 6

|  | Pressure loss | PM collection efficiency | Hydrostatic strength | Clogging of partition wall due to soot | Exhaust gas purification performance |
|---|---|---|---|---|---|
| Example 1 | Good | Good | Good | Good | Good |
| Example 2 | Good | Good | Good | Good | Good |
| Example 3 | Good | Good | Good | Good | Good |
| Example 4 | Good | Good | Good | Good | Good |
| Example 5 | Good | Good | Good | Good | Good |
| Example 6 | Good | Good | Good | Good | Good |
| Example 7 | Good | Good | Good | Good | Good |
| Example 8 | Good | Good | Good | Good | Good |
| Example 9 | Good | Good | Good | Good | Good |
| Example 10 | Good | Good | Good | Good | Good |
| Example 11 | Good | Good | Good | Good | Good |
| Example 12 | Good | Good | Good | Good | Good |
| Example 13 | Good | Good | Good | Good | Good |
| Example 14 | Good | Good | Good | Good | Good |
| Example 15 | Good | Good | Good | Good | Good |
| Example 16 | Good | Good | Good | Good | Good |
| Comparative Example 1 | Bad | Bad | Bad | Bad | Bad |
| Comparative Example 2 | Bad | Bad | Good | Bad | Bad |
| Comparative Example 3 | Bad | Bad | Good | Bad | Bad |
| Comparative Example 4 | Bad | Good | Good | Bad | Bad |
| Comparative Example 5 | Bad | Good | Good | Bad | Bad |
| Comparative Example 6 | Bad | Good | Good | Bad | Bad |
| Comparative Example 7 | Bad | Good | Good | Bad | Bad |
| Comparative Example 8 | Bad | Good | Good | Bad | Bad |

As shown in Table 6, the honeycomb catalyst bodies of Examples I to 16 exhibited a sufficient partition wall strength, a low pressure loss, rarely showed clogging due to soot, and exhibited a sufficiently high PM collection efficiency and a high exhaust gas purification efficiency as compared with the honeycomb structures of Comparative Examples 1 to 8.

The honeycomb catalyst body according to the present invention may be suitably utilized as a filter that removes particulate matter contained in exhaust gas discharged from an internal combustion engine (e.g., automobile engine, construction machine engine, or stationary industrial engine), a combustion apparatus, and the like.

**EP 2 236 188 B1**

## Claims

1. A honeycomb catalyst body (300) comprising:

    a honeycomb structure (100) that includes a porous partition wall (4) that has a number of pores (25) and is disposed to form a plurality of cells (3) that extend between two end faces (2a, 2b) of the honeycomb structure (100), and a plurality of plugging sections (10) that are disposed to plug the plurality of cells (3) on either of the end faces (2a, 2b) or inside the plurality of cells (3); and
    a catalyst layer (15) that is supported on the surface of the partition wall (4) and contains a catalyst,
    the partition wall (4) having a thickness of 76.2 to 177.8 $\mu$m, an average pore size of 8 to 30 $\mu$m, and a porosity of 10 to 35%, and the honeycomb structure (100) having a cell density of 12.4 to 45.0 cells/cm$^2$; and wherein the ratio of the total open area of the plurality of cells (3) to the sum of the cross-sectional area of the partition wall (4) and the total open area of the plurality of cells (3) in a cross section perpendicular to a cell extension direction is 83 to 90%.

2. The honeycomb catalyst body (300) according to claim 1, wherein the partition wall (4) has a permeability of $1 \times 10^{-12}$ to $6 \times 10^{-12}$ m$^2$.

3. The honeycomb catalyst body (300) according to claim 1 or claim 2, wherein the hydraulic diameter (m) of the cells (3) and the permeability (m$^2$) of the partition wall (4) satisfy the relationship "(hydraulic diameter of cells)$^2$ / (permeability) = $1.0 \times 10^5$ to $4.5 \times 10^6$".

4. The honeycomb catalyst body (300) according to any one of claims 1 to 3, wherein the honeycomb structure (100) is formed of a material that contains at least one ceramic selected from the group consisting of cordierite, aluminum titanate, silicon carbide, sialon, mullite, silicon nitride, zirconium phosphate, zirconia, titania, alumina, and silica.

5. The honeycomb catalyst body (300) according to any one of claims 1 to 4, the honeycomb catalyst body (300) having a thermal expansion coefficient of $1.0 \times 10^{-6}$/°C or less measured at 40 to 800°C in the cell extension direction.

6. The honeycomb catalyst body (300) according to any one of claims 1 to 5, wherein the catalyst is an oxidizing catalyst that contains platinum and cerium oxide.

7. The honeycomb catalyst body (300) according to any one of claims 1 to 5, wherein the catalyst is a three-way catalyst that contains at least one noble metal selected from the group consisting of platinum, rhodium, and palladium, and a promoter that contains at least one of cerium oxide and zirconium oxide.

8. The honeycomb catalyst body (300) according to any one of claims 1 to 5, wherein the catalyst is a NOx occlusion/reduction catalyst that contains at least one of an alkali metal and an alkaline earth metal.

9. The honeycomb catalyst body (300) according to any one of claims 1 to 8, wherein the catalyst layer (15) further contain a promoter that contains at least one compound selected from the group consisting of alumina, zirconia, and ceria, and a holding material that holds the catalyst and the promoter.

10. The honeycomb catalyst body (300) according to any one of claims 1 to 9, wherein the catalyst layer (15) has a density of 80 to 400 g/L.

## Patentansprüche

1. Wabenkatalysatorkörper (300), der Folgendes umfasst:

    eine Wabenstruktur (100), die Folgendes umfasst: eine poröse Trennwand (4), die eine Reihe von Poren (25) aufweist und angeordnet ist, um eine Vielzahl an Zellen (3) zu bilden, die sich zwischen zwei Endflächen (2a, 2b) der Wabenstruktur (100) erstrecken und eine Vielzahl an Verschlussabschnitten (10), die angeordnet sind, um die Vielzahl an Zellen (3) an einer der Endflächen (2a, 2b) oder im Inneren der Vielzahl an Zellen (3) zu verschließen; und
    eine Katalysatorschicht (15), die auf der Oberfläche der Trennwand (4) getragen wird und einen Katalysator enthält,

**25**

wobei die Trennwand (4) eine Dicke von 76,2 bis 177,8 $\mu$m, eine mittlere Porengröße von 8 bis 30 $\mu$m und eine Porosität von 10 bis 35 % aufweist und die Wabenstruktur (100) eine Zelldichte von 12,4 bis 45,0 Zellen/cm$^2$ aufweist, und wobei

der Anteil der Gesamtöffnungsfläche der Vielzahl an Zellen (3) an der Summe der Querschnittsfläche der Trennwand (4) und der Gesamtöffnungsfläche der Vielzahl an Zellen (3) in einem Querschnitt im rechten Winkel auf die Zellerstreckungsrichtung 83 bis 90 % beträgt.

2. Wabenkatalysatorkörper (300) nach Anspruch 1, worin die Trennwand (4) eine Permeabilität von $1 \times 10^{-12}$ bis $6 \times 10^{-12}$ m$^2$ aufweist.

3. Wabenkatalysatorkörper (300) nach Anspruch 1 oder 2, worin für den hydraulischen Durchmesser (m) der Zellen (3) und die Permeabilität (m$^2$) der Trennwand (4) folgendes Verhältnis gilt: (hydraulischer Durchmesser der Zellen)$^2$/ (Permeabilität) = $1,0 \times 10^5$ bis $4,5 \times 10^6$.

4. Wabenkatalysatorkörper (300) nach einem der Ansprüche 1 bis 3, wobei die Wabenstruktur (100) aus einem Material ausgebildet ist, das zumindest ein aus folgender Gruppe ausgewähltes Keramikmaterial enthält: Cordierit, Aluminiumtitanat, Siliciumcarbid, Sialon, Mullit, Siliciumnitrid, Zirconiumphosphat, Zirconiumdioxid, Titanoxid, Aluminiumoxid und Siliciumdioxid.

5. Wabenkatalysatorkörper (300) nach einem der Ansprüche 1 bis 4, wobei der Wabenkatalysatorkörper bei 40 bis 800 °C in Zellerstreckungsrichtung einen Wärmeausdehnungskoeffizienten von $1,0 \times 10^{-6}$/°C oder weniger aufweist.

6. Wabenkatalysatorkörper (300) nach einem der Ansprüche 1 bis 5, worin der Katalysator ein oxidierender Katalysator ist, der Platin und Ceroxid enthält.

7. Wabenkatalysatorkörper (300) nach einem der Ansprüche 1 bis 5, worin der Katalysator ein Dreiweg-Katalysator ist, der zumindest ein aus der aus Platin, Rhodium und Palladium bestehenden Gruppe ausgewähltes Edelmetall und einen Promotor enthält, der zumindest eine Substanz ausgewählt aus Ceroxid und Zirconiumoxid enthält.

8. Wabenkatalysatorkörper (300) nach einem der Ansprüche 1 bis 5, worin der Katalysator ein NOx-Einschluss-/ Reduktionskatalysator ist, der zumindest eine Substanz ausgewählt aus einem Alkalimetall und einem Erdalkalimetall enthält.

9. Wabenkatalysatorkörper (300) nach einem der Ansprüche 1 bis 8, worin die Katalysatorschicht (15) ferner einen Promotor enthält, der zumindest eine aus der aus folgenden bestehenden Gruppe ausgewählte Verbindung enthält: Aluminiumoxid, Zirconiumdioxid und Ceroxid, sowie ein Haltematerial, das den Katalysator und den Promotor hält.

10. Wabenkatalysatorkörper (300) nach einem der Ansprüche 1 bis 9, worin die Katalysatorschicht (15) eine Dichte von 80 bis 400 g/l aufweist.


**Revendications**

1. Corps de catalyseur en nid d'abeilles (300) comprenant :

une structure en nid d'abeilles (100) qui comprend une paroi de séparation poreuse (4) qui a un certain nombre de pores (25) et qui est disposée pour former une pluralité de cellules (3) qui s'étendent entre deux faces d'extrémité (2a, 2b) de la structure en nid d'abeilles (100), et une pluralité de sections d'obturation (10) qui sont disposées pour obturer la pluralité de cellules (3) sur l'une ou l'autre des faces d'extrémité (2a, 2b) ou à l'intérieur de la pluralité de cellules (3) ; et
une couche de catalyseur (15) qui est supportée sur la surface de la paroi de séparation (4) et qui contient un catalyseur,
la paroi de séparation (4) ayant une épaisseur de 76,2 à 177,8 $\mu$m, une taille de pore moyenne de 8 à 30 $\mu$m, et une porosité de 10 à 35 %, et la structure en nid d'abeilles (100) ayant une densité de cellules de 12,4 à 45,0 cellules/cm$^2$ ; et dans lequel
le rapport entre l'aire ouverte totale de la pluralité de cellules (3) et la somme de la section de la paroi de séparation (4) et de l'aire ouverte totale de la pluralité de cellules (3) en coupe perpendiculairement à une direction d'extension des cellules est de 83 à 90 %.

**2.** Corps de catalyseur en nid d'abeilles (300) selon la revendication 1, dans lequel la paroi de séparation (4) a une perméabilité de $1 \times 10^{-12}$ à $6 \times 10^{-12}$ m$^2$.

**3.** Corps de catalyseur en nid d'abeilles (300) selon la revendication 1 ou la revendication 2, dans lequel le diamètre hydraulique (m) des cellules (3) et la perméabilité (m$^2$) de la paroi de séparation (4) satisfont à la relation « (diamètre hydraulique des cellules)$^2$/(perméabilité) = $1,0 \times 10^5$ à $4,5 \times 10^6$ ».

**4.** Corps de catalyseur en nid d'abeilles (300) selon l'une quelconque des revendications 1 à 3, dans lequel la structure en nid d'abeilles (100) est constituée d'un matériau qui contient au moins une céramique sélectionnée dans le groupe consistant en la cordiérite, le titanate d'aluminium, le carbure de silicium, le sialon, la mullite, le nitrure de silicium, le phosphate de zirconium, la zircone, le titane, l'alumine et la silice.

**5.** Corps de catalyseur en nid d'abeilles (300) selon l'une quelconque des revendications 1 à 4, le corps de catalyseur en nid d'abeilles (300) ayant un coefficient de dilatation thermique de $1,0 \times 10^{-6}$/°C ou moins mesuré à 40 à 800 °C dans la direction d'extension des cellules.

**6.** Corps de catalyseur en nid d'abeilles (300) selon l'une quelconque des revendications 1 à 5, dans lequel le catalyseur est un catalyseur oxydant qui contient du platine et de l'oxyde de cérium.

**7.** Corps de catalyseur en nid d'abeilles (300) selon l'une quelconque des revendications 1 à 5, dans lequel le catalyseur est un catalyseur à trois fonctions qui contient au moins un métal noble sélectionné dans le groupe consistant en le platine, le rhodium et le palladium, et un promoteur qui contient au moins l'un de l'oxyde de cérium et de l'oxyde de zirconium.

**8.** Corps de catalyseur en nid d'abeilles (300) selon l'une quelconque des revendications 1 à 5, dans lequel le catalyseur est un catalyseur d'occlusion/réduction de NOx qui contient au moins l'un d'un métal alcalin et d'un métal alcalino-terreux.

**9.** Corps de catalyseur en nid d'abeilles (300) selon l'une quelconque des revendications 1 à 8, dans lequel la couche de catalyseur (15) contient en outre un promoteur qui contient au moins un composé sélectionné dans le groupe consistant en l'alumine, la zircone et l'oxyde de cérium, et un matériau de maintien qui maintient le catalyseur et le promoteur.

**10.** Corps de catalyseur en nid d'abeilles (300) selon l'une quelconque des revendications 1 à 9, dans lequel la couche de catalyseur (15) a une densité de 80 à 400 g/L.

FIG.1

FIG.2

300

FIG.3

EP 2 236 188 B1

300

15

4

25

21

FIG.4

<u>301</u>

15

4

25

27

22

21

EP 2 236 188 B1

FIG.5

FIG.6

**REFERENCES CITED IN THE DESCRIPTION**

**Patent documents cited in the description**

- JP 2003033664 A
- JP 2001269585 A
- EP 1707251 A
- US 2008110143 A